# EUROPEAN PATENT SPECIFICATION

(11) **EP 2 321 865 B1**
(45) Date of publication and mention of the grant of the patent: **10.06.2015**
(21) Application number: 09809253.9
(22) Date of filing: 27.08.2009
(51) Int. Cl.: H01M 2/04, H01M 2/08, H01M 2/10, H01M 2/06, H01M 2/30

(54) **BATTERY COVER BOARD ASSEMBLY, BATTERY HAVING THE SAME, BATTERY PACK AND METHOD OF FORMING THE SAME**
BATTERIEABDECKUNGSPLATTENANORDNUNG, BATTERIE DAMIT, BATTERIEPACK UND VERFAHREN ZU SEINER HERSTELLUNG
ENSEMBLE PLAQUE DE COUVERCLE DE BATTERIE, BATTERIE EN ÉTANT DOTÉE, BLOC-BATTERIE ET PROCÉDÉ DE FORMATION Y AFFÉRANT

(30) Priority: 27.08.2008 CN 200810142082; 14.11.2008 CN 200810181818; 22.12.2008 US 341704; 24.12.2008 WO PCT/CN2008/073678
(43) Date of publication of application: 18.05.2011
(73) Proprietor: Byd Company Limited, Shenzhen, Guangdong 518118 (CN)
(72) Inventor: ZHU, Jianhua, Guangdong 518118 (CN); ZHOU, Hao, Guangdong 518118 (CN)
(74) Representative: Hoffmann Eitle
(86) International application number: PCT/CN2009/073581
(87) International publication number: WO 2010/022668

(56) References cited:
- CN-A- 1 716 657
- CN-A- 101 315 990
- CN-A- 101 388 445
- CN-Y- 201 051 525
- CN-Y- 201 051 525
- GB-A- 2 082 377
- US-A1- 2005 287 434
- US-A1- 2006 115 727
- US-A1- 2006 115 727

## Description

### CROSS-REFERENCE TO RELATED APPLICATIONS

This application claims the benefit of priority to the following applications:
1) Chinese Patent Application No. 200810181818.2 filed on November 14, 2008.
2) Chinese Patent Application No. 200810142082.8 filed on August 27, 2008.
3)PCT Patent Application with serial number PCT/CN2008/073678 filed on December 24, 2008.
4) US Patent Application No. US12/341704 filed on December 22, 2008.

### FIELD OF THE INVENTION

The present invention relates to battery field, more particularly to an improved battery cover board, a battery having the battery cover board, wherein the electrode terminal is sheet in shape and the battery pack formed by serial or parallel connecting the batteries.

### BACKGROUND OF THE INVENTION

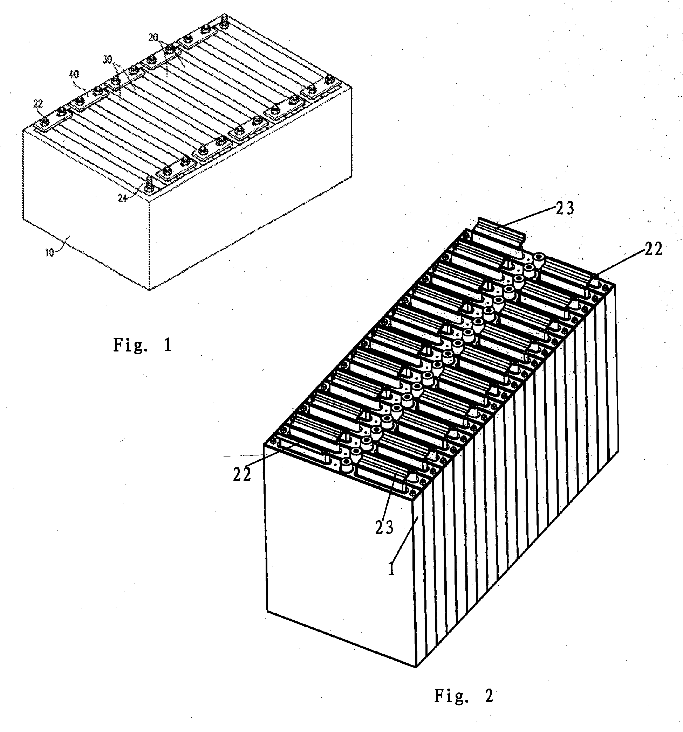

In the modern society that is increasingly short of oil, electric vehicles become an alternative within people's consideration. In the transportation means like electric vehicles, hybrid vehicles etc, conventionally, a plurality of batteries are connected with each other to form a battery pack to supply higher power. The conventional battery connecting structure is shown in Fig 1. In this power battery pack 10, screws and nuts are served as battery positive electrode poles 22 and negative electrode poles 24, a connecting member 40 is used to connect the batteries in series. In this case, the contact internal resistance may be high and the battery pack may be too heavy. Meanwhile, if the connection between screw and nut looses, the contact internal resistance may become higher and may lead to failure of sealing and decrease the liability of the battery.

In viewing of problems, such as large internal resistance and heavy weight etc, on the power battery pack mentioned above, the applicant itself is granted with a Chinese Patent application No. ZL200720147273.4, Publication number CN201051525 U on the sheet-like leading out tab structure, as shown in Fig 2, sheet-like tabs 22 and 23 replace the conventional electrode pole structure. The positive electrode and negative electrode are lead out of the battery. In the method, the connection between the battery core, the tab as well as the battery 1 is formed by welding. Comparing with the connection structure of screws and nuts, the contact internal resistance thereof may be decreased. In this connection structure, the sealing structure between the tab and the cover board play a key role which directly affects the battery performance.

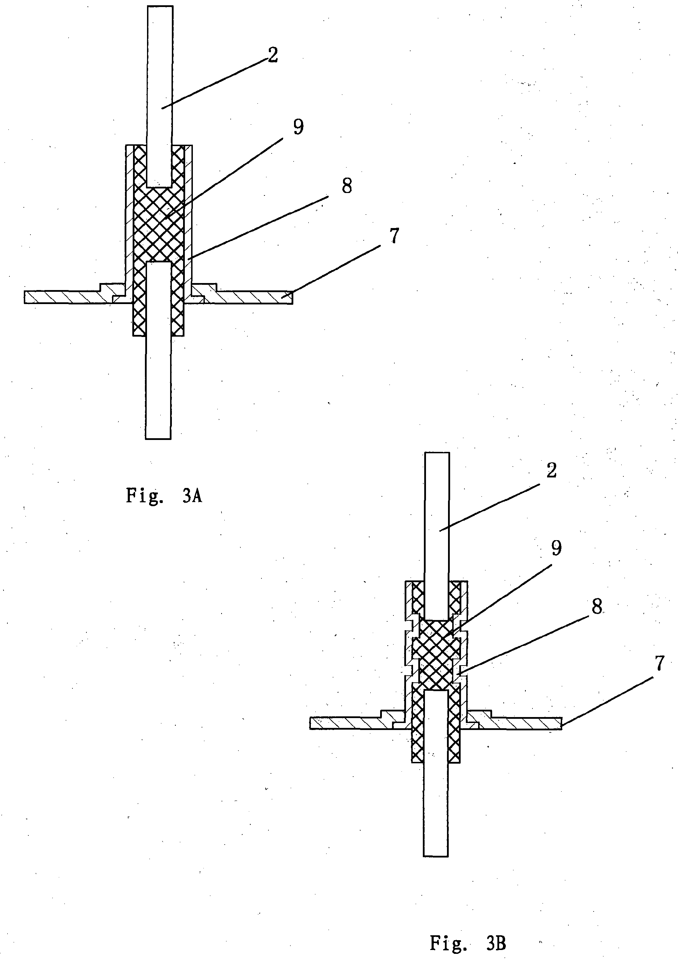

As shown in Fig 3a, the sealing structure comprises a hollow rivet 8 and a sealing member 9. The sealing member 9 is positioned inside the hollow rivet 8, the electrode terminal 2 (which is the above mentioned tab, for convenience of description, it will be referred to as an electrode terminal in the following) penetrates through the sealing member 9. The hollow rivet 8 holds the sealing member and deformablely compresses the sealing member to seal the electrode terminal accordingly. The hollow rivet 8 and the cover board 7 may be welded together. As shown in Fig. 3b, the hollow rivet 8 is compressed into the shape shown in the Fig. 3b to obtain sealing purpose.

However, the inventor himself found that as the sealing member 9 is disposed in the hollow rivet 8, the electrode terminal 2 protruding out of the sealing member 9 may contact with hollow rivet 8. Moreover the hollow rivet 8 is conductive and is connected with the battery shell, so it is possible to cause a short circuit of the battery. As a result, risk of the battery manufacture and use will be high..

A battery cover board assembly in accordance with the preamble of claim 1 is derivable from CN 201 051 525 Y.

US 2005/287434 A1 and US 2006/115727 A1 each disclose a rechargeable battery in which terminals are each surrounded by a sealing member and a tubular body, the sealing member extending on top of the tubular body.

### SUMMARY OF THE INVENTION

To solve the problems, the present invention provided a safe and reliable battery cover board assembly. Further, the present invention needs to provide a battery having the same and a battery pack. Additionally, the present invention needs to provide a method of forming the battery cover board assembly, a method of forming the battery, and a method of forming the battery pack accordingly.

According to an embodiment of the invention, a battery cover board assembly is provided to achieve at least one object mentioned above, comprising: a cover board with at least a through hole formed thereon, at least a hollow rivet fixed on the cover board with a hollow portion thereof being communicated with each of the at least a through hole in which a sealing member is disposed, with an electrode terminal penetrating through the hollow rivet and embedding in the sealing member. The sealing member may be configured to extend beyond an upper portion of the hollow rivet and wrap around the upper portion thereof.

According to another embodiment of the invention, a battery is provided, comprising: a battery shell, at least a battery cover board assembly mentioned above, at least a battery core and electrolyte which are encapsulated in a sealed space formed by the battery shell and at least a battery cover board assembly. And a positive electrode terminal and a negative electrode terminal are led out from the at least a battery cover board assembly which are electrically connected with positive and negative electrodes of the at least a battery core respectively.

According to still another embodiment of the invention, a battery pack is provided, having a plurality of batteries mentioned above connected in series and/or parallel via the electrode terminals thereof.

According to yet another embodiment of the invention, a method of forming an electrode battery cover board assembly is provided, comprising the following steps: 1) forming a cover board with at least a through hole; 2) welding a hollow rivet with the cover board via the through hole, a hollow portion of the hollow rivet being communicated with the through hole; and 3) penetrating an electrode terminal through the hole and injecting sealing material into the hollow rivet and the through hole on the cover board to form a sealing member inside the hollow rivet and the cover board, the sealing member being configured to extend beyond an upper portion of the hollow rivet and wrapped around the upper portion thereof.

According to still yet another embodiment of the invention, a method of forming a battery is provided, comprising the following steps: a) providing at least a battery cover board assembly according to claim 18, at least a battery core and a battery shell, b) placing the at least a battery core in the battery shell and coupling the electrode terminal electrically with the at least a battery core; and c) coupling the battery cover board assembly with the battery shell to form a sealed space, and injecting electrolyte into the sealed space.

According to a further embodiment of the invention, a method of forming a battery pack is provided, comprising the following steps: providing a plurality of batteries manufactured by the method mentioned above, and connecting the batteries electrically in series and/or parallel.

As the sealing member extends to exceed the upper portion of the hollow rivet and wraps the upper portion of the hollow rivet and forms a flange structure to seal the electrode terminals according to the present invention, when the battery is impacted by a force and the electrode is distorted, the exposed sealing material may avoid short circuit of the electrode terminal and the rivet and. As a result the safety performance is increased.

### DESCRIPTION OF THE DRAWINGS

These and other aspects and advantages of the invention will become apparent and more readily appreciated from the following descriptions taken in conjunction with the drawings in which:
Fig 1 shows a perspective view of a conventional pole electrode battery pack;
Fig 2 shows a perspective view of a conventional battery pack in which thin-walled shaped electrode terminals are welded together;
Fig 3a shows a cross sectional view of a conventional sealing structure in the battery;
Fig 3b shows a cross sectional view of another conventional sealing structure in the battery;
Fig 4 shows a cross sectional view of a battery cover board assembly according to an embodiment of the invention;
Fig 5 shows a schematic view of a structure on the electrode terminal according to an embodiment of the invention;
Fig 6 shows a cross sectional view of a battery cover board assembly according to another embodiment of the invention;
Fig 7 shows a plan view of a cover board protection member used in a battery according to an embodiment of the invention; and
Figs. 8-11 show plan views of a cover board protection member used in a battery according to some embodiments of the invention respectively.

### DETAILED DESCRIPTION OF THE EMBODIMENT

The aforementioned features and advantages of the invention as well as additional features and advantages thereof will be more clearly understood hereafter as a result of a detailed description of the following embodiments when taken conjunction with the drawings.

### First Embodiment

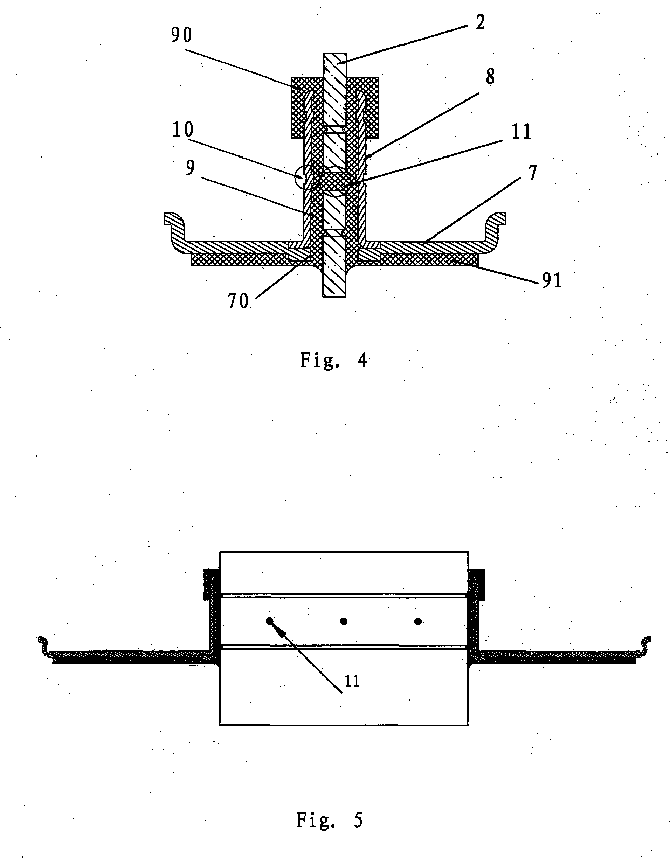

As shown in Fig 4, the battery cover board assembly comprises a cover board 7, a hollow rivet 8, a sealing member 9 and an electrode terminal 2. The cover board 7 has a through hole 70 formed thereon, and a hollow rivet 8 is welded at the through hole. At least a through hole may be formed on the cover board 7 with each hollow rivet 8 being welded at each through hole 70. For example, there may be two through holes formed on the cover board for leading out two electrode terminals of a battery. The through holes may be arranged side by side or face to face as industrial conditions may require. Thus, it shall be noted that the following will only describe the case in which a through hole is formed for clarity and descriptive brevity purpose, rather than limiting the scope of the invention. And each and/or all features described hereinafter may well be suited to the case where a plurality of through holes70are formed.

The hollow portion of hollow rivet 8 communicates with the through hole70 on cover board 7. The electrode terminal 2 penetrates through the hollow rivet 8 and the through hole 70 on the cover board 7.Then sealing material is injected into hollow rivet 8 and the through hole70 of the cover board 7 to form a sealing member 9 inside hollow rivet 8 and the through hole 70 on the cover board 7, whereby the electrode terminal 2 is injected inside the sealing member 9. After that, the sealing member 9 extends to exceed the upper portion of the hollow rivet and wraps around the upper portion of the hollow rivet and forms a flange structure 90 to insulate the electrode terminal 2 from the hollow rivet 8 and the cover board 7. In an embodiment of the invention, the sealing member 9 further forms an insulating part underneath the cover board 7 and serves as a separator ring 91 to avoid the electric contact of the tab with the cover board 7.

Hollow rivet 8 and sealing member 9 can be used as a sealing structure and the electrode terminal 2 penetrates through the sealing structure. Sealing member 9 is disposed inside hollow rivet 8. Electrode terminal 2 penetrates through sealing member 9 and the hollow rivet 8 holds the sealing member 9 to seal electrode terminal 2. The sealing member 9 extends to exceed the upper portion of hollow rivet 8 and wraps the upper portion of hollow rivet 8 and forms a flange structure 90.

The cover board 7 in the present embodiment has a through hole 70 and a hollow rivet 8 communicates with the through hole 70. Besides, the cover board 7 further has an injection hole for injecting electrolyte into the battery shell. If it is a divided two parts cover board 7, then the injection hole can be set on one part of cover board 7.

The electrode terminal (or electrode tab) can be formed from Cu, Al, and Ni and so on. In an embodiment of the invention, to enhance the binding force between the electrode terminal 2 and the sealing member 9, the electrode terminal 2 has a structure 11 for enhancing the binding force with the sealing material. For example, the structure can be a convex structure, through holes or any structure to increase the surface roughness or uneven structure of the electrode terminal 2. Or other alternative means may be used which is obvious for a person skilled in the art to come up with after reading the disclosure of the present invention. As shown in Fig 5, the structure 11 distributes on a surface of the electrode terminal 2 at equal intervals and running through the cross section of the electrode terminal 2. The structure 11 may be any shape and size. The shape may, in an embodiment of the invention, be circular, square, or diamond etc.

As shown in Fig 4, the sealing member 9 in the sealing structure is formed by injection molding the sealing material. The sealing material can be plastics, for example, it can be selected from but not limited to PFA (injection grade perfluoro-alkoxy copolymers), PES(poly(oxyphenylene sulfone)), PPS(polyphenylene sulfide), modified PP(modified polypropylene) and so on. Or the sealing material can be rubber, for example it can be selected from but not limited to ethylen e-prop ylene-dienemischpolymere. Or the sealing material can be resin, for example it can be selected from but not limited to epoxy resin, phenolic modified epoxy resin and so on Or the sealing material can be adhesive glue, for example it can be selected from but not limited to two-composition epoxy resin, hot melt adhesive and so on. The sealing material must have insulating characteristics, electrolyte resistance and HF resistance and can be bound with Cu, Al, stainless steel. The sealing material may, in an embodiment of the invention, be PPS (polyphenylene sulfide).

The hollow rivet 8 may have a hollow structure. In the present embodiment, the hollow rivet 8 is prepared from stainless steel. In an embodiment of the invention, strengthening ribs 10 may be formed on the hollow rivet 8 to enhance the strength thereof.

Normally an insulating separator ring 91 is formed underneath the cover board 7, which is used to separate the battery core from the cover board 7. The separator ring 91 can be integrally formed with the battery cover board assembly and become a part of the battery cover board assembly.

In an embodiment of the invention, to improve the binding strength between the electrode terminal 2 and the sealing member 9, the electrode terminal 2 has a structure 11 for enhancing the binding force with the sealing material.

The preparation method of the cover board is described as follows:

Preparing a cover board 7 and a hollow rivet 8, the cover board 7 being formed with the through hole 70; welding the hollow rivet 8 to the cover board 7 and the hollow portion in the hollow rivet 8 communicates with the through hole; penetrating an electrode terminal 2 through the hollow rivet 8 and injecting sealing material into hollow rivet 8 to form a sealing member 9 inside the hollow rivet 8, whereby the electrode terminal 2 is injection molded in the sealing member 9; forming a flange structure 90 which wraps around the hollow rivet by extending the sealing member 9 to exceed the hollow rivet.

During injection molding, the original separator ring 91 may be injected on the cover board 7 as a part of the sealing member 9. As the sealing structure is formed by adding sealing material after welding the rivet with the cover board 7, the manufacturing process is simplified and risk of sealing failure may be decreased. Compare to welding after injection, the process is simplified and also the sealing material damage caused by heat produced during welding the rivet to the cover board 7 is avoided.

In an embodiment of the invention, adhesive may be further coated onto the contact surface between the sealing material and the electrode terminal 2, the hollow rivet 8 and the cover board 7 to enhance the sealing effect.

In an embodiment of the invention, strengthen ribs 10 may be formed on the hollow rivet 8.

During manufacturing, before injecting the sealing material into hollow rivet 8, the cover board 7 and rivet 8 may be roughened accordingly.

### Second Embodiment

The present embodiment discloses a battery (or single cell) comprising a battery shell (not shown in the figures), a battery cover board assembly, electrolyte and at least a battery core. Please be noted that the battery having only a battery core is described. However, a person skilled in the art can combine a plurality of battery cores to increase the power of the battery. And all the features and/or solutions described hereinafter may well be adapted to the case in which a plurality of battery cores are incorporated in the battery shell. The battery cover board assembly has been described in details in the first embodiment. It comprises a cover board 7, a hollow rivet 8, a sealing member 9 and an electrode terminal 2. The battery core and electrolyte are sealed in the sealed space formed by the battery shell and the battery cover board assembly. The battery core is electrically connected with the electrode terminal 2, and the battery may have a positive terminal and a negative terminal. The cover board 7 has a through hole on it. The electrode terminal 2 penetrates the through hole and reaches out to serve as the positive electrode and negative electrode respectively. The hollow rivet 8 and sealing member 9 can be instituted as the sealing structure. The electrode terminal 2 is sealed by the sealing structure. The sealing member 9 is disposed in the hollow rivet 8, while the electrode terminal 2 penetrates through the sealing member 9. The hollow rivet 8 holds the sealing member 9 to seal the electrode terminal 2. The sealing member 9 extends beyond the upper portion of the hollow rivet 8 and wraps around the upper portion of the hollow rivet 8 to form a flange structure 90.

The cover board 7, the electrode terminal 2 and the sealing structure in the present embodiment form the battery cover board assembly according to the first embodiment.

The battery core comprises a positive plate, a separator and a negative plate. The battery core can be divided as coiled core and stacked core according to different forming methods. The coiled core is the battery core formed by coiling a positive plate, a separator and a negative plate. A positive tab and a negative tab are respectively obtained from the positive plate and the negative plate. The tabs according to the present disclosure reach out of the battery 1 and serve as electrodes which are always referred to as electrode terminals 2, i.e., positive and negative terminals. The stacked battery core is prepared by in turns overlapping a plurality of positive plates, separators, negative plates and separators. A positive tab is obtained from each positive plate, and a negative tab is obtained from each negative plate. Therefore a plurality of positive tabs are connected with a positive electrode leading tab which serves as the positive electrode terminal of the battery, and a plurality of negative tabs are connected with a negative electrode leading tab which serves as the negative electrode terminal of the battery. The positive electrode leading tab is the positive electrode terminal and the negative electrode leading tab is the negative electrode terminal. The connecting method may be welding, and welding method can be ultrasonic welding, cold pressure welding, laser welding, brazing, flash butt welding, friction welding, or resistance welding etc.

As the preparation method of the positive plate, the separator, the battery core and the negative plate are known to those skilled in the art, detailed description will be omit here for clarity purpose.

The battery shell is commonly made from steel or Al. Material can be selected according to the requirements. The cover board 7 may also be made from metal material. In the present example, cover board 7 is stainless steel.

In an embodiment of the invention, the positive terminal and the negative terminal can be obtained from the same side of the battery 1, for example the terminals can be obtained from the top end of the battery 1. As shown in Fig 2, the terminals are obtained from the same side of the battery 1. In this case, one cover board 7 is needed, and two electrode terminals 2 are penetrating through the cover board 7. Or the terminals can be obtained from two sides of the battery. In this case, two cover boards 7 are needed and they are set at each end of the battery shell. The positive terminal and negative terminal are obtained from both ends and the two cover boards 7 are welded with the battery shell respectively.

As shown in Fig 4, the sealing member 9 in the sealing structure is formed by injection molding. The sealing material can be plastic. For example, it may be selected from but not limited to PFA (injection grade perfluoro-alkoxy copolymers), PES(poly(oxyphenylene sulfone)), PPS(polyphenylene sulfide), modified PP(modified polypropylene) and so on. Or it can be rubber, for example it can be selected from but not limited to ethylen e-prop ylene-dienemischpolymere. Or it can be resin, for example it can be selected from but not limited to epoxy resin, phenolic modified epoxy resin and so on. Or it can be adhesive glue, for example it can be selected from but not limited to two-composition epoxy resin, hot melt adhesive and so on. The sealing material must have insulating characteristics, electrolyte resistant and HF resistant and can be bind with Cu, Al, stainless steel. The sealing material may, in an embodiment of the invention, be PPS (polyphenylene sulfide).

The hollow rivet 8 has a hollow structure. In the present embodiment, the hollow rivet 8 is prepared from stainless steel. In an embodiment of the invention, strengthening ribs 10 are formed on the hollow rivet 8 to enhance the strength thereof.

During injection molding, the hollow rivet 8 is placed in the mould and then the terminal 2 penetrates through the hollow rivet 8 and injection molding is performed to form the sealing structure shown in Fig 4. The mould is able to form a flange structure 90 which wraps around the upper portion of the hollow rivet by using a part of the sealing material after injection. The binding force and sticking force between different materials and the structure of wrapping the sealing material around a hollow rivet may improve air tightness and water permeability under certain pressure. Compare to the original mechanical sealing method, it may have improved sealing reliability. As a flange structure 90 wrapping the rivet is employed, when the battery is impacted by an external force resulting in distortion of the electrode terminal 2, the exposed sealing material may avoid a short circuit of the electrode terminal and the rivet 8. As a result the safety performance of the battery is improved accordingly.

After injection molding, the hollow rivet 8 is welded onto the cover board 7.

Alternatively, the rivet is first welded on the cover board 7 and the welded structure of cover board 7 and the rivet are placed into the mould for injection molding. After injection molding, a flange structure 90 is formed on the rivet and the separator ring 91 under the cover board 7 can be integrally injected onto the cover board 7. In this case, the manufacturing process is simplified and possibility of sealing failure may be decreased. Compare to welding after injection, the process is simplified and also sealing material damage caused by heat produced during welding the rivet and cover board 7 is avoided.

To ensure the battery safety performance, temperature protection components or devices, safety vents may be set in the battery 1. As it is well known in the art, the detailed description is omitted here.

The battery preparation method comprises the following steps :an electrode battery cover board assembly, a battery core and a battery shell are formed. The battery core in the battery shell is placed and an end of the electrode terminal which is under the cover board with the battery core is coupled. The battery cover board assembly is welded with the battery shell to form a sealed space. The battery core is disposed inside the sealed space. Then electrolyte is injected into the sealed space.

Detailed description will be explained hereinafter.

The battery core is prepared as follows: Positive electrode material and negative electrode material are prepared. The positive electrode material is coated on an Al foil to form a positive plate and the negative electrode material is coated on the Cu foil to form a negative plate. A prepared separator with suitable length and width is coiled or overlapped to form the battery core. The steps are known in the art and detailed description thereof will be omitted herein.

The battery shell can be prepared conventionally. For example it can be formed by punching or purchased.

Then, the battery core is placed into the battery shell and one end of the electrode terminal 2 under cover board 7 is connected with the battery core by welding. And the welding method can be ultrasonic welding, cold pressure welding, laser welding, brazing, flash butt welding, friction welding, and resistance welding etc, In an embodiment of the invention cold pressure welding is selected.

Then, the battery shell and the battery cover board assembly are welded together, and the electrolyte is injected into a sealed space of the battery shell assembled with the cover board assembly.

Thus a battery is formed. After that, it may be packed and so on, as it is known in the art, so the detailed description thereof is omitted here.

Meanwhile, in an embodiment of the invention, the electrode terminal 2, the cover board 7 and the hollow rivet are roughened before injecting the sealing material into hollow rivet 8. The roughening means that the contacting surface of the work piece is roughened, the purpose of which is to obtain improved connections between the sealing material and the electrode terminal 2, the hollow rivet and the cover board 7 and thus to realize excellent sealing result.

In an embodiment of the invention, after injection, adhesive is injected on the contacting surface of the sealing member 9 with the electrode terminal 2, the cover board 7 and the hollow rivet. In this case, the binding force is enhanced and it may improve air tightness and water permeability under certain pressure, which means better sealing reliability.

While preparing the hollow rivet 8, in an embodiment of the invention, strengthening ribs 10 may be set on the hollow rivet 8 to enhance the strength.

In an embodiment of the invention, the method of forming the battery further comprises a step of forming a structure 11 on the electrode terminal 2 to enhance the binding force with the sealing member 9. The structure 11 distributes on the surface of the electrode terminal 2 at equal intervals and running through the cross section of the electrode terminal 2. The structure 11 may have any shape and size. For example, the shape may, in an embodiment of the invention, be circular, square, or diamond.

### Third Embodiment

The present embodiment mainly describes a power battery pack. The battery 1 prepared in the second embodiment is parallel, serial or parallel and serial connected with each other according to the required current output and voltage to form a desired battery pack.

The parallel or serial connection between the batteries 1 can be realized by connecting the electrode terminals 2 of the batteries 1 in a selected or desired manner. As shown in Fig 2, the batteries 1 are serially connected with each other, one electrode terminal 2 of a battery 1 is connected with the electrode terminal 2 which has the reverse polarity of an adjacent battery 1. The other electrode terminal 2 is connected with the electrode terminal 2 which has the reverse polarity of another adjacent battery 1. The serial connection method of the battery 1 comprises but is not limited to the following methods: the negative terminal 23 on one end of battery 1 is connected with the positive terminal 22 of the adjacent battery 1, or the positive terminal 22 on one end of battery 1 is connected with the negative terminal 23 of the adjacent battery 1. In this manner, a couple of electrode terminals 2 with reverse polarity of the two adjacent batteries 1 are welded together, such that the two batteries 1 at two ends of the battery pack each has a left electrode terminal 2 that hasn't connected with other electrode terminals 2, and the left two electrode terminals 2 have reverse polarities and serve as the positive electrode and negative electrode of the battery pack.

The electrode terminals 2 are attached together providing that the thin-walled shaped electrode terminals 2 are attached and have certain binding force therebetween. In an embodiment of the invention, the thin-walled shaped electrode terminals 2 are welded together. And welding method can be ultrasonic welding, cold pressure welding, laser welding, brazing, flash butt welding, friction welding, and/or resistance welding etc. In an embodiment of the invention, cold pressure welding may be selected. For cold pressure welding, sufficient static pressure is enough to realize welding and there is little heat emission during welding and there is almost no vibration and relative displacement.

### Fourth Embodiment

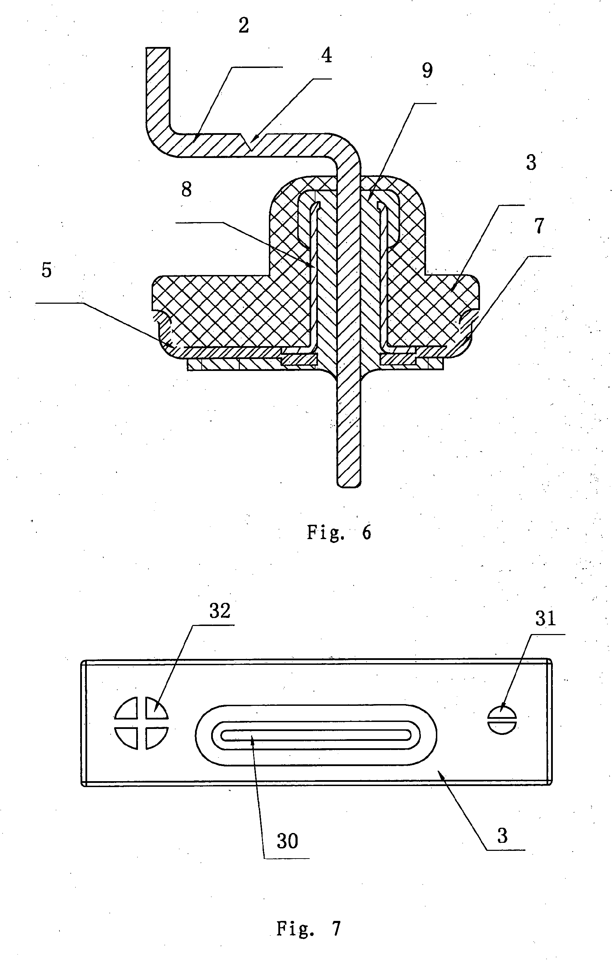

As shown in Fig 6, in an embodiment of the invention, an insulating cover board protection member 3 is further provided on the cover board 7. The cover board protection member 3 separates and insulates the electrode terminals 2 from the cover board 7.

The cover board protection member 3 can be prepared from insulating, solvent resistant and fire retardant material, for example, plastics, rubber or resin. If it is plastic, it may be selected from but not limited to PFA (injection grade perfluoro-alkoxy copolymers), PES (poly(oxyphenylene sulfone)), modified PP(modified polypropylene) and so on. If it is rubber, it can be selected from but not limited to ethylene-propylene-dienemischpolymere. Or if it is resin, it can be selected from but not limited to epoxy resin, phenolic modified epoxy resin and so on. The cover board protection member 3 may, in an embodiment of the invention, be prepared from rubber.

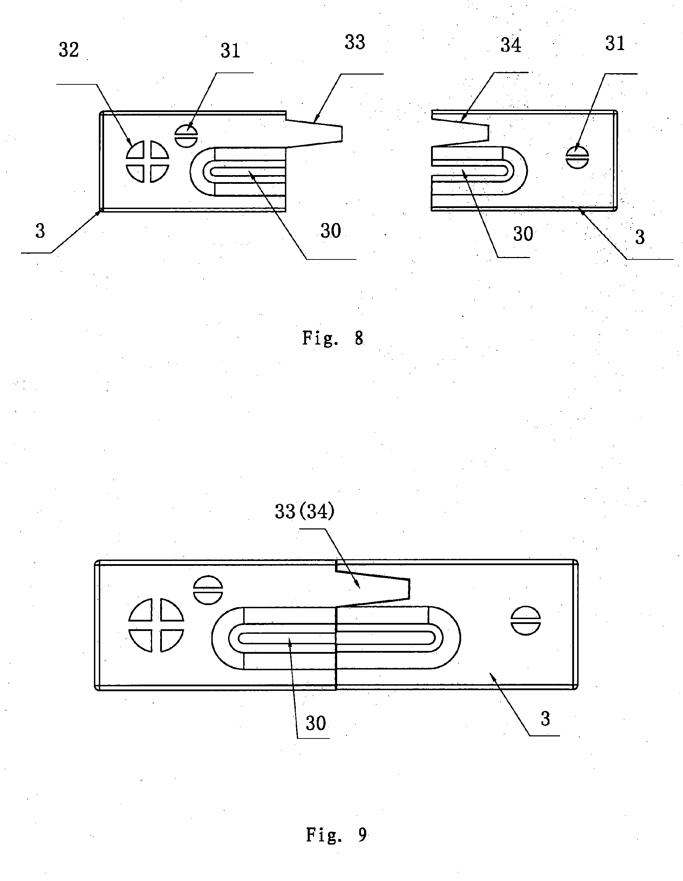

As shown in Fig 7 and Fig 8, an opening 30 is formed on the cover board protection member 3 so that the electrode terminal 2 may be led out therefrom. Electrode marks may be provided on the cover board, for example the negative electrode mark 31 in Fig 7 and Fig 8.

The cover board protection member 3 may have an integral structure or a divided structure. The shape of cover board protection member 3 matches the battery cover board assembly, and the divided structure divides the opening 30 into halves. An integral cover board protection member is shown in Fig. 7.

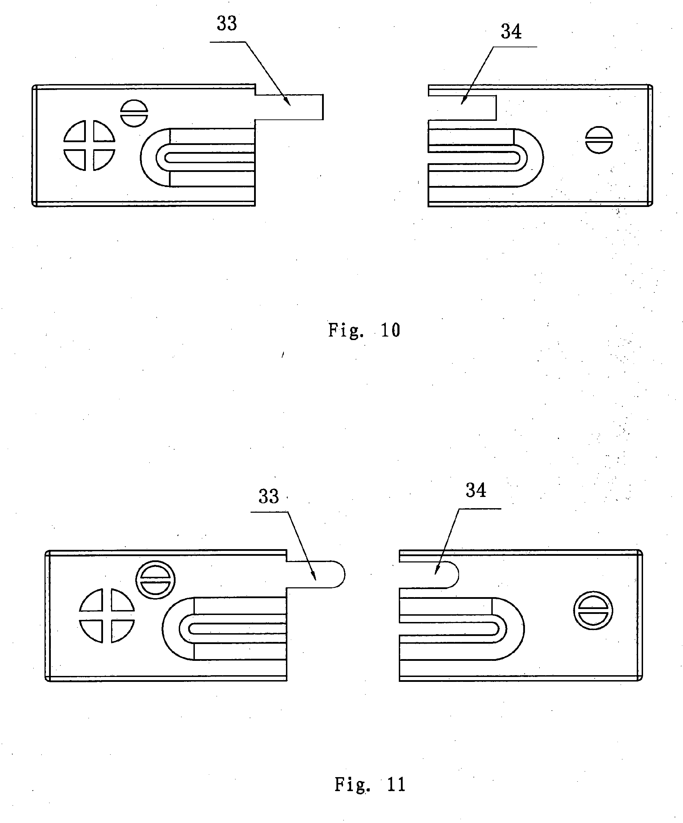

The divided structure is an interlocking structure. The cover board is separated into two parts, for example a part of the cover board has a male portion 33, and the other portion has a female portion 34 accordingly. The male and female portions can be any matched triangle, trapezium, square, rectangular or "U" shaped structure etc. For example, as shown in Fig. 8, the male portion 33 and the female portion 34 are matched trapeziums. After interlocking, the two portions are shown in Fig 9, for example, the male portion 33 and the female portion 34 shown in Fig 10 are matched rectangles. As shown in Fig 11, the male portion 33 and the female portion 34 are matched U shapes. The interlocking structure is beneficial to separate or fix the divided portions and may have stronger connections. It may also be convenient for battery assembly.

The electrode terminal 2 exposing out of the battery 1 has a bending structure, which has certain hardness. In this case, it will be convenient to be attached with other batteries. The cover board protection member 3 is the divided structure and the hole on the cover board protection member 3 is divided into two parts. The leading out tabs are held by the protection member from two sides so that the bending structure on the electrode terminals is bypassed. Therefore, it reduces the difficulties of deriving the leading out tab out of the opening 30 on the cover board protection member.

As shown in Fig 7 and Fig 8, an exhaust hole 32 is formed on the cover board protection member 3 to release the pressure while the safety vent opens. To protect the safety vent from impact caused by an external force, the exhaust hole may, in an embodiment of the invention, have a fence structure.

A flange 5 may be formed on the edge of the cover board 7. As the battery 1 needs to be covered by a layer of insulating adhesive paper, and the insulating adhesive paper needs to cover a side and upper portion of the flange 5 on the edge of the cover board, without the cover board protection member 3, the corners of the flange may penetrate through the insulating adhesive paper and cause safety related issues of the battery. In the present embodiment, the edge of the cover board protection member is formed in steps and it can totally cover the cover board 7. Therefore, the insulating adhesive paper is only required to cover the side portion of flange 5, so the corners of the flange 5 may be prevented from penetrating the insulating adhesive paper and the battery may be safer.

In an embodiment of the invention, the electrode terminal 2 exposed out of the cover board 7 may have a groove 4, which will break under external force to keep the battery safe.

The groove 4 can be prepared by any method known in the art or by punching. The depth of the groove 4 is about 10%-95% of the thickness of the electrode terminal. The width of the groove 4 is about 50%-500% of the width of the electrode terminal 2. There may be one or more grooves on the electrode terminal.

The thickness of the electrode terminal 2 can be decided according to the battery type and preparation requests. According to an embodiment of the invention, the thickness of the electrode terminal 2 has a thickness of about 0.2-20mm, in an embodiment of the invention, of about 2.5mm.

The electrode terminal 2 can be prepared from any conductive material that is known in the art, for example pure Cu or Pure Al, which may be further determined by battery standard. When the electrode terminal 2 is made from pure Cu, the depth of the groove 4 may be 50%-90% of the thickness of the electrode terminal 2 and the width of the groove 4 may be 100%-500% of the depth of the groove 4. When the electrode terminal is Al, the depth of the groove is about 30-80% of the thickness of the electrode terminal 2 and the width of the groove may be about 100%-300% of the depth of the groove.

In an embodiment of the invention, soft and conductive filler with certain binding force may be filled in the groove. The filler may be Sn, conductive plastics, conductive rubber and so on.

It will be apparent to those skilled in the art that variations and modifications of the present invention may be made without departing from the scope of the present invention. Therefore, it is to be understood that the invention is not to be limited to the specific embodiments disclosed and that modifications and other embodiments are intended to be included within the scope of the appended claims.

## Claims

1. A battery cover board assembly, comprising:
a cover board with at least a through hole formed thereon,
at least a hollow rivet fixed on the cover board with a hollow portion thereof being communicated with each of the at least a through hole in which a sealing member is disposed, with an electrode terminal penetrating through the hollow rivet and embedding in the sealing member, wherein
the sealing member is configured to extend beyond an upper portion of the hollow rivet,
**characterized in that**
the sealing member is further configured to wrap around the upper portion of the hollow rivet.

2. The battery cover board assembly according to claim 1, wherein the electrode terminal is configured to have a thin-walled shape, the hollow rivet and the cover board preferably being integrally formed.

3. The battery cover board assembly according to claim 1, with one of the following features:
- adhesive is coated on a contact surface of the sealing member with the electrode terminal,
- the sealing member is formed in the hollow rivet by injection molding;
- strengthening ribs are formed on the at least a hollow rivet;
- each electrode terminal is configured with a structure for increasing the binding force of the electrode terminal with the sealing member;
- the sealing member penetrates through each through hole of the cover board and forms a separator ring underneath the lower surface of the cover board;
- the sealing member is made from the material that is insulating, electrolyte resistant, HF resistant and bondable with Cu, Al or stainless steel.

4. The battery cover board assembly according to claim 1, further comprising an insulating cover board protection member protecting the cover board and the protruding electrode terminal for insulating the electrode terminal from the cover board.

5. The battery cover board assembly according to claim 1, wherein the cover board protection member has an interlocking divided structure.

6. The battery cover board assembly According to any one of claims 1, 4 and 5, wherein the electrode terminal outside the hollow rivet is formed with a groove running in a lateral direction of the electrode terminal, soft and conductive filler with a certain binding force preferably being filed in the groove.

7. A battery, comprising:
a battery shell,
at least a battery cover board assembly according to claim 1;
at least a battery core and electrolyte which are encapsulated in a sealed space formed by the battery shell and the at least a battery cover board assembly, wherein a positive electrode terminal and a negative electrode terminal are led out from the at least a battery cover board assembly which are electrically connected with positive and negative electrodes of the at least a battery core respectively.

8. The battery according to claim 7, wherein the battery shell has a rectangular parallelepiped shape with an opening end, the battery cover board assembly is matched and sealed with the opening end of the battery shell with two electrode terminals protruding out of the battery cover board assembly and serving as positive and negative electrodes of the battery respectively.

9. The battery according to claim 7, wherein the battery shell has a rectangular parallelepiped shape with two opening ends, two battery cover board assemblies are sealed with the two opening ends, and the positive electrode terminal and the negative electrode terminal are led out from the two battery cover board assemblies at both ends respectively.

10. A battery pack having a plurality of batteries according to claim 7 connected in series and/or parallel via the electrode terminals thereof.

11. A method of forming an electrode battery cover board assembly, comprising the following steps:
1) forming a cover board with at least a through hole;
2) welding a hollow rivet with the cover board via the through hole, a hollow portion of the hollow rivet being communicated with the through hole; and
3) penetrating an electrode terminal through the hole and injecting sealing material into the hollow rivet and the through hole on the cover board to form a sealing member inside the hollow rivet and the cover board, the sealing member being configured to extend beyond an upper portion of the hollow rivet and wrap around the upper portion of the hollow rivet.

12. The method according to claim 11, further comprising one of the following features:
- the electrode terminal has a thin-walled shape, and the electrode terminal, the cover board and the hollow rivet are roughened before injecting the sealing material into the hollow rivet and the through hole of the cover board,
- adhesive agent is injected between a contacting surface of the sealing member with the electrode terminal after injection molding,
- forming strengthening ribs on the hollow rivet, preferably forming a structure for increasing the binding force with the sealing member on the electrode,
- forming a separator ring underneath the lower surface of the cover board while injection molding,
- forming an insulating cover board protection member over the hollow rivet and the cover board for separating and insulating the electrode terminal from the cover board, the cover board protection member preferably having an interlocking divided structure,
- forming a groove on a surface of the electrode terminal outside the hollow rivet, the groove running in a lateral direction of the electrode terminal, preferably filling in the groove with soft and conductive filler with a certain binding force.

13. A method of forming a battery comprising the following steps:
a) providing at least a battery cover board assembly according to claim 11, at least a battery core and a battery shell,
b) placing the at least a battery core in the battery shell and coupling the electrode terminal electrically with the at least a battery core; and
c) coupling the battery cover board assembly with the battery shell to form a sealed space, and injecting electrolyte into the sealed space.

14. A method of forming a battery pack comprising the following steps:
providing a plurality of batteries manufactured by the method according to claim 13, and
connecting the batteries electrically in series and/or parallel.

15. A battery cover board assembly according to claim 1, comprising:
a cover board with a through hole formed thereon,
a hollow rivet fixed on the cover board with a hollow portion thereof being communicated with the through hole of the through hole,
a sealing member disposed in the hollow rivet, and
an electrode terminal penetrating through the hollow rivet and embedding in the sealing member, wherein the sealing member is configured to extend beyond an upper portion of the hollow rivet and wrap around the upper portion of the hollow rivet.

## Patentansprüche

1. Batterieabdeckplattenaufbau, umfassend:
eine Abdeckplatte, auf der mindestens eine Durchgangsbohrung ausgebildet ist,
mindestens eine Hohlniete, die an der Abdeckplatte fixiert ist, wobei ein hohler Abschnitt derselben mit jeder der mindestens einen Durchgangsbohrung verbunden ist, in welcher ein Abdichtungselement angeordnet ist, wobei ein Elektrodenanschluss durch die Hohlniete durchdringt und in dem Abdichtungselement eingelassen ist, wobei
das Abdichtungselement dazu vorgesehen ist, sich weiter als ein oberer Abschnitt der Hohlniete zu erstrecken,
**dadurch gekennzeichnet, dass**
das Abdichtungselement ferner dazu vorgesehen ist, um den oberen Abschnitt der Hohlniete gewickelt zu sein.

2. Batterieabdeckplattenaufbau nach Anspruch 1, wobei der Elektrodenanschluss dazu ausgestaltet ist, eine dünnwandige Form zu haben, wobei die Hohlniete und die Abdeckplatte vorzugsweise aus einem Stück ausgebildet sind.

3. Batterieabdeckplattenaufbau nach Anspruch 1, mit einem der folgenden Merkmale:
- Klebstoff ist an einer Kontaktoberfläche des Abdichtungselements mit dem Elektrodenanschluss aufgebracht,
- das Abdichtungselement ist in der Hohlniete durch Spritzgießen ausgebildet;
- Verstärkungsrippen sind an der mindestens einen Hohlniete ausgebildet;
- jeder Elektrodenanschluss ist mit einer Struktur zum Erhöhen der Bindungskraft des Elektrodenanschlusses mit dem Abdichtungselement versehen;
- das Abdichtungselement durchdringt durch jede Durchgangsbohrung der Abdeckplatte und bildet einen Trennungsring unterhalb der unteren Oberfläche der Abdeckplatte aus;
- das Abdichtungselement ist aus einem Material, das isolierend, elektrolytbeständig, HF beständig und mit Cu, Al oder Edelstahl verbindbar ist.

4. Batterieabdeckplattenaufbau nach Anspruch 1, ferner aufweisend, ein Isolierungsabdeckplattenschutzelement, das die Abdeckplatte und den hervorstehenden Elektrodenanschluss zum Isolieren des Elektrodenanschlusses von der Abdeckplatte schützt.

5. Batterieabdeckplattenaufbau nach Anspruch 1, wobei das Abdeckplattenschutzelement eine ineinandergreifende aufgeteilte Struktur hat.

6. Batterieabdeckplattenaufbau nach einem der Ansprüche 1, 4 und 5, wobei der Elektrodenanschluss außerhalb der Hohlniete mit einer Nut ausgebildet ist, die in eine laterale Richtung des Elektrodenanschlusses verläuft, wobei weiches und leitfähiges Füllmaterial mit einer bestimmten Bindungskraft vorzugsweise in die Nut gefüllt ist.

7. Eine Batterie, umfassend:
ein Batteriegehäuse,
mindestens einen Batterieabdeckplattenaufbau nach Anspruch 1;
mindestens einen Batteriekern und Elektrolyt, die in einem abgedichteten Raum, der durch das Batteriegehäuse und den mindestens einen Batterieabdeckplattenaufbau ausgebildet ist, eingekapselt ist, wobei ein positiver Elektrodenanschluss und ein negativer Elektrodenanschluss von dem mindestens einen Batterieabdeckplattenaufbau herausgeführt sind, die jeweils elektrisch mit positiven und negativen Elektroden des mindestens einen Batteriekerns verbunden sind.

8. Batterie nach Anspruch 7, wobei das Batteriegehäuse eine rechteckige, parallelflache Form mit einem Öffnungsende hat, wobei der Batterieabdeckplattenaufbau mit dem Öffnungsende des Batteriegehäuses übereinstimmt und abgedichtet ist, wobei zwei Elektrodenanschlüsse aus dem Batterieabdeckplattenaufbau hervorstehen und jeweils als positive und negative Elektrode der Batterie dienen.

9. Batterie nach Anspruch 7, wobei das Batteriegehäuse eine rechteckige, parallelflache Form mit zwei Öffnungsenden hat, wobei zwei Batterieabdeckplattenaufbauten mit den beiden Öffnungsenden abgedichtet sind und der positive Elektrodenanschluss und der negative Elektrodenanschluss jeweils von den Batterieabdeckplattenaufbauten an beiden Enden herausgeführt werden.

10. Batteriebündel, das eine Vielzahl von Batterien nach Anspruch 7 aufweist, die mittels deren Elektrodenanschlüssen in Reihe und/oder parallel verbunden sind.

11. Verfahren zum Ausbilden eines Elektrodenbatterieabdeckplattenaufbaus, folgende Schritte umfassend:
1) Ausbilden einer Abdeckplatte mit mindestens einer Durchgangsbohrung;
2) Verschweißen einer Hohlniete mit der Abdeckplatte durch die Durchgangsbohrung, wobei ein hohler Abschnitt der Hohlniete mit der Durchgangsbohrung verbunden wird; und
3) Durchdringen eines Elektrodenanschlusses durch die Bohrung und Einspritzen von Abdichtungsmaterial in die Hohlniete und die Durchgangsbohrung an der Abdeckplatte, um ein Abdichtungselement innerhalb der Hohlniete und der Abdeckplatte auszubilden, wobei das Abdichtungselement dazu ausgestaltet ist, sich weiter als ein oberer Abschnitt der Hohlniete zu erstrecken und um den oberen Abschnitt der Hohlniete zu wickeln.

12. Verfahren nach Anspruch 11, ferner eines der folgenden Merkmale umfassend:
- der Elektrodenanschluss hat eine dünnwandige Form und der Elektrodenanschluss, die Abdeckplatte und die Hohlniete werden angeraut, bevor das Abdichtungsmaterial in die Hohlniete und die Durchgangsbohrung der Abdeckplatte gespritzt wird,
- Haftvermittler wird zwischen einer Kontaktierungsoberfläche des Abdichtungselements mit dem Elektrodenanschluss nach einem Spritzgießen eingespritzt,
- Ausbilden von Verstärkungsrippen an der Hohlniete, vorzugsweise Ausbilden einer Struktur zum Erhöhen der Bindungskraft zwischen dem Abdichtungselement und der Elektrode,
- Ausbilden eines Trennrings unterhalb der unteren Oberfläche der Abdeckplatte während des Spritzgießens,
- Ausbilden eines Isolationsabdeckplattenschutzelements über der Hohlniete und der Abdeckplatte zum Trennen und Isolieren des Elektrodenanschlusses von der Abdeckplatte, wobei das Abdeckplattenschutzelement vorzugsweise eine ineinandergreifende aufgeteilte Struktur hat,
- Ausbilden einer Nut an einer Oberfläche des Elektrodenanschlusses außerhalb der Hohlniete, wobei die Nut in lateraler Richtung des Elektrodenanschlusses verläuft, vorzugsweise Ausfüllen der Nut mit einem weichen und leitenden Füllmaterial, das eine bestimmte Bindungskraft hat.

13. Verfahren zum Ausbilden einer Batterie, die folgenden Schritte umfassend:
a) Vorsehen von mindestens einem Batterieabdeckplattenaufbau entsprechend Anspruch 11, mindestens einem Batteriekern und einem Batteriegehäuse,
b) Platzieren des mindestens einen Batteriekerns in dem Batteriegehäuse und elektrisches Koppeln des Elektrodenanschlusses mit dem mindestens einen Batteriekern; und
c) Koppeln des Batterieabdeckplattenaufbaus mit dem Batteriegehäuse, um einen abgedichteten Raum auszubilden, und Einspritzen von Elektrolyt in den abgedichteten Raum.

14. Verfahren zum Ausbilden eines Batteriebündels, die folgenden Schritte umfassend:
Vorsehen einer Vielzahl von Batterien, die durch das Verfahren entsprechend Anspruch 13 hergestellt wurden, und elektrisches Verbinden der Batterien in Reihe und/oder parallel.

15. Batterieabdeckplattenaufbau nach Anspruch 1, umfassend:
eine Abdeckplatte, auf der eine Durchgangsbohrung ausgebildet ist,
eine Hohlniete, die an der Abdeckplatte fixiert ist, wobei ein hohler Abschnitt derselben mit der Durchgangsbohrung verbunden ist,
ein Abdichtungselement, das in der Hohlniete angeordnet ist, und
einen Elektrodenanschluss, der durch die Hohlniete durchdringt und in das Abdichtungselement eingelassen ist, wobei das Abdichtungselement dazu ausgestaltet ist, sich weiter als ein oberer Abschnitt der Hohlniete zu erstrecken und um den oberen Abschnitt der Hohlniete zu wickeln.

## Revendications

1. Ensemble de plaque de couvercle de batterie, comprenant :
une plaque de couvercle avec au moins un trou traversant formé sur celle-ci,
au moins un rivet creux fixé sur la plaque de couvercle avec une partie creuse de celui-ci étant en communication avec chacun de l'au moins un trou traversant dans lequel un élément d'étanchéité est disposé, avec une borne d'électrode pénétrant à travers le rivet creux et incorporée dans l'élément d'étanchéité, où
l'élément d'étanchéité est configuré pour s'étendre au-delà d'une partie supérieure du rivet creux,
**caractérisé en ce que**
l'élément d'étanchéité est en outre configuré pour s'enrouler autour de la partie supérieure du rivet creux.

2. Ensemble de plaque de couvercle de batterie selon la revendication 1, dans lequel la borne d'électrode est configurée pour avoir une forme à paroi mince, le rivet creux et la plaque de couvercle étant de préférence formés de manière solidaire.

3. Ensemble de plaque de couvercle de batterie selon la revendication 1, avec l'une des caractéristiques suivantes :
un adhésif est déposé sur une surface de contact de l'élément d'étanchéité avec la borne d'électrode,
l'élément d'étanchéité est formé dans le rivet creux par moulage par injection ;
des nervures de renforcement sont formées sur l'au moins un rivet creux ;
chaque borne d'électrode est configurée avec une structure pour augmenter la force de liaison de la borne d'électrode avec l'élément d'étanchéité ;
l'élément d'étanchéité pénètre à travers chaque trou traversant de la plaque de couvercle et forme une bague de séparation sous la surface inférieure de la plaque de couvercle ;
l'élément d'étanchéité est réalisé à partir du matériau qui est isolant, résistant aux électrolytes, résistant à HF et pouvant être lié à Cu, Al ou à l'acier inoxydable.

4. Ensemble de plaque de couvercle de batterie selon la revendication 1, comprenant en outre un élément de protection de plaque de couvercle isolant protégeant la plaque de couvercle et la borne d'électrode faisant saillie pour isoler la borne d'électrode de la plaque de couvercle.

5. Ensemble de plaque de couvercle de batterie selon la revendication 1, dans lequel l'élément de protection de plaque de couvercle a une structure divisée de verrouillage.

6. Ensemble de plaque de couvercle de batterie selon l'une quelconque des revendications 1, 4 et 5, dans lequel la borne d'électrode à l'extérieur du rivet creux est formée d'une rainure s'étendant dans une direction latérale de la borne d'électrode, une charge molle et conductrice avec une certaine force de liaison étant de préférence chargée dans la rainure.

7. Batterie, comprenant :
une coque de batterie,
au moins un ensemble de plaque de couvercle de batterie selon la revendication 1 ;
au moins un noyau de batterie et un électrolyte qui sont encapsulés dans un espace étanche formé par la coque de batterie et l'au moins un ensemble de plaque de couvercle de batterie, où une borne d'électrode positive et une borne d'électrode négative sortent de l'au moins un ensemble de plaque de couvercle de batterie, lesquelles bornes sont reliées électriquement à des électrodes positive et négative de l'au moins un noyau de batterie respectivement.

8. Batterie selon la revendication 7, dans laquelle la coque de batterie a une forme de parallélépipède rectangle avec une extrémité d'ouverture, l'ensemble de plaque de couvercle de batterie est adapté à et scellé avec l'extrémité d'ouverture de la coque de batterie avec deux bornes d'électrode faisant saillie en dehors de l'ensemble de plaque de couvercle de batterie et servant d'électrodes positive et négative de la batterie respectivement.

9. Batterie selon la revendication 7, dans laquelle la coque de batterie a une forme de parallélépipède rectangle avec deux extrémités d'ouverture, deux ensembles de plaques de couvercle de batterie sont scellés avec les deux extrémités d'ouverture, et la borne d'électrode positive et la borne d'électrode négative sortent des deux ensembles de plaques de couvercle de batterie au niveau des deux extrémités respectivement.

10. Bloc-batterie ayant une pluralité de batteries selon la revendication 7 reliées en série et/ou en parallèle via les bornes d'électrodes de celles-ci.

11. Procédé de formation d'un ensemble de plaque de couvercle de batterie, comprenant les étapes suivantes :
1) la formation d'une plaque de couvercle avec au moins un trou traversant ;
2) le soudage d'un rivet creux avec la plaque de couvercle via le trou traversant, une partie creuse du rivet creux étant en communication avec le trou traversant ; et
3) la pénétration d'une borne d'électrode à travers le trou et l'injection de matériau d'étanchéité dans le rivet creux et le trou traversant sur la plaque de couvercle pour former un élément d'étanchéité à l'intérieur du rivet creux et de la plaque de couvercle, l'élément d'étanchéité étant configuré pour s'étendre au-delà d'une partie supérieure du rivet creux et pour s'enrouler autour de la partie supérieure du rivet creux.

12. Procédé selon la revendication 11, comprenant en outre l'une des caractéristiques suivantes :
la borne d'électrode a une forme à paroi mince, et la borne d'électrode, la plaque de couvercle et le rivet creux sont rendus rugueux avant d'injecter le matériau d'étanchéité dans le rivet creux et le trou traversant de la plaque de couvercle,
un agent adhésif est injecté entre une surface de contact de l'élément d'étanchéité avec la borne d'électrode après le moulage par injection,
la formation de nervures de renforcement sur le rivet creux, de préférence la formation d'une structure pour augmenter la force de liaison avec l'élément d'étanchéité sur l'électrode,
la formation d'une bague de séparation sous la surface inférieure de la plaque de couvercle lors du moulage par injection,
la formation d'un élément de protection de plaque de couvercle isolant sur le rivet creux et la plaque de couvercle pour séparer et isoler la borne d'électrode de la plaque de couvercle, l'élément de protection de plaque de couvercle ayant de préférence une structure divisée de verrouillage,
la formation d'une rainure sur une surface de la borne d'électrode à l'extérieur du rivet creux, la rainure s'étendant dans une direction latérale de la borne d'électrode, de préférence le chargement dans la rainure avec une charge molle et conductrice avec une certaine force de liaison.

13. Procédé de formation d'une batterie comprenant les étapes suivantes :
a) la fourniture d'au moins un ensemble de plaque de couvercle de batterie selon la revendication 11, au moins un noyau de batterie et une coque de batterie,
b) le placement de l'au moins un noyau de batterie dans la coque de batterie et le couplage électrique de la borne d'électrode à l'au moins un noyau de batterie ; et
c) le couplage de l'ensemble de plaque de couvercle de batterie à la coque de batterie pour former un espace étanche, et l'injection d'électrolyte dans l'espace étanche.

14. Procédé de formation d'un bloc-batterie comprenant les étapes suivantes :
la fourniture d'une pluralité de batteries fabriquées par le procédé selon la revendication 13, et
la liaison électrique des batteries en série et/ou parallèle.

15. Ensemble de plaque de couvercle de batterie selon la revendication 1, comprenant :
une plaque de couvercle avec un trou traversant formé sur celle-ci,
un rivet creux fixé sur la plaque de couvercle avec une partie creuse de celui-ci étant en communication avec le trou traversant,
un élément d'étanchéité disposé dans le rivet creux, et
une borne d'électrode pénétrant à travers le rivet creux et incorporée dans l'élément d'étanchéité, où l'élément d'étanchéité est configuré pour s'étendre au-delà d'une partie supérieure du rivet creux et pour s'enrouler autour de la partie supérieure du rivet creux.
